(19) Europäisches Patentamt
European Patent Office
Office européen des brevets

(11) **EP 3 808 545 A1**

(12) **EUROPÄISCHE PATENTANMELDUNG**

(43) Veröffentlichungstag:
21.04.2021 Patentblatt 2021/16

(51) Int Cl.:
*B29C 70/20* (2006.01)          *B29C 70/22* (2006.01)
*B29C 70/50* (2006.01)          *B32B 5/26* (2006.01)
*B32B 5/28* (2006.01)

(21) Anmeldenummer: 19202934.6

(22) Anmeldetag: 14.10.2019

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **DIREKT-IMPRÄGNIERUNGS PROZESS MIT THERMOPLASTISCHEM POLYURETHAN**

(57) Ein Verfahren zur Herstellung eines Mehrschichtverbundwerkstoffes enthaltend mindestens zwei flächig und stoffschlüssig übereinander liegende Lagen Verbundwerkstoff, wobei die mindestens eine erste Lage Verbundwerkstoff Endlosfasern enthält, wobei die Endlosfasern innerhalb dieser mindestens einen Lage unidirektional ausgerichtet sind und in einem auf thermoplastischem Polyurethan basierenden Kunststoff eingebettet sind, und die mindestens eine zweite Lage Verbundwerkstoff ein textiles Flächengebilde enthält, wobei das textile Flächengebilde in einem auf thermoplastischem Polyurethan basierenden Kunststoff eingebettet ist, einen entsprechend hergestellten Mehrschichtverbundwerkstoff, einen Mehrschichtverbundwerkstoff enthaltend mindestens zwei flächig und stoffschlüssig übereinander liegende Lagen Verbundwerkstoff, wobei die mindestens eine erste Lage Verbundwerkstoff Endlosfasern enthält, wobei die Endlosfasern innerhalb dieser mindestens einen Lage unidirektional ausgerichtet sind und in einem auf thermoplastischem Polyurethan basierenden Kunststoff eingebettet sind, und die mindestens eine zweite Lage Verbundwerkstoff ein textiles Flächengebilde enthält, wobei das textile Flächengebilde in einem auf thermoplastischem Polyurethan basierenden Kunststoff eingebettet ist und dessen Verwendung.

EP 3 808 545 A1

**Beschreibung**

Die vorliegende Erfindung betrifft ein Verfahren zur Herstellung eines Mehrschichtverbundwerkstoffes enthaltend mindestens zwei flächig und stoffschlüssig übereinander liegende Lagen Verbundwerkstoff, wobei die mindestens eine erste Lage Verbundwerkstoff Endlosfasern enthält, wobei die Endlosfasern innerhalb dieser mindestens einen Lage unidirektional ausgerichtet sind und in einem auf thermoplastischem Polyurethan basierenden Kunststoff eingebettet sind, und die mindestens eine zweite Lage Verbundwerkstoff ein textiles Flächengebilde enthält, wobei das textile Flächengebilde in einem auf thermoplastischem Polyurethan basierenden Kunststoff eingebettet ist, mindestens umfassend die folgenden Schritte (A) Bereitstellen mindestens einer ersten Lage Verbundwerkstoff enthaltend Endlosfasern, wobei die Endlosfasern innerhalb dieser mindestens einen ersten Lage unidirektional ausgerichtet sind und in einem auf thermoplastischem Polyurethan basierenden Kunststoff eingebettet sind, wobei der Faservolumenanteil der mindestens einen ersten Lage Verbundwerkstoff 10 bis 45 Vol.-% beträgt, (B) flächiges Aufbringen mindestens eines textilen Flächengebildes auf die mindestens eine erste Lage Verbundwerkstoff aus Schritt (A), um ein Halbzeug enthaltend mindestens eine erste Lage Verbundwerkstoff und mindestens ein textiles Flächengebilde zu erhalten, und (C) Verpressen des Halbzeugs aus Schritt (B) bei einem Druck von 2 bis 40 bar(a), einer Temperatur T von 130 bis 290 °C für eine Zeit von 30 bis 600 s, um den Mehrschichtverbundwerkstoff mit einem Faservolumenanteil von 25 bis 55 Vol.-% zu erhalten.

Die vorliegende Erfindung betrifft des Weiteren einen entsprechenden Mehrschichtverbundwerkstoff, ein Teil für den Einsatz im Automobilbereich, in Gepäckstücken, in Möbeln, in bzw. an Fahrrädern, in Sportausrüstungen oder als Verstärkungselemente in Bekleidung, wobei die genannten Teile mindestens einen erfindungsgemäßen Mehrschichtverbundwerkstoff enthalten, die Verwendung des erfindungsgemäßen Mehrschichtverbundwerkstoffs und ein Verfahren zur Herstellung eines solchen Teils.

Insbesondere auf dem Gebiet der Sportgeräte und Sportausrüstung besteht der Trend, leichte und robuste Produkte anbieten zu können. Dieses Ziel wird bislang unter anderem durch den Einsatz von faserverstärkten Mehrschichtverbundwerkstoffen basierend auf Epoxiden, Polyurethanen, Polyamiden oder Polyetheretherketonen erreicht. Diese können eine sehr flexible Einstellbarkeit der gewünschten Eigenschaften wie beispielsweise Mechanik, Haptik, Optik etc. aufweisen und sind daher für ein breites Spektrum an Sportanwendungen geeignet. Um die erwünschten mechanischen Eigenschaften wie beispielsweise Steifigkeit, Zähigkeit oder Festigkeit in Sportausrüstung wie Helmen, Schienbein- , Knie-, Arm- oder Körperschutzausrüstung und Sportartikeln wie Ski, Skischuhe, Sohlen von Sportschuhen, Wakeboards, Surfboards, Paddeln, Taucherflossen, Hockey- oder Tennisschläger, sowie im Bereich von Fahrrädern, beispielsweise E-Fahrräder, Rennräder, Mountainbikes, Gravel-Bikes, City-Bikes, insbesondere mit strukturellen Bauteilen, beispielsweise an Rahmen, Gabel, Lenker, als Anbauteile, beispielsweise als Sattel, Sattelstütze, Aufnahmen, Federn, Kurbeln, weiter optimieren zu können, empfiehlt sich der Einsatz von faserverstärkten Mehrschichtverbundwerkstoffen basierend auf thermoplastischem Polyurethan. Zusätzlich werden solche Verbundwerkstoffe von Kunden als hochwertig wahrgenommen und können durch die mechanischen Vorteile wie hohe Zähigkeit auch die Sicherheit der Anwender während des Sports erhöhen.

Aus dem Stand der Technik sind zahlreiche Faserverbundwerkstoffe und Verfahren zu deren Herstellung bekannt. WO 2013/098224 A1 beschreibt ein Verfahren zur Herstellung eines Faserverbundwerkstoffs in Form eines kunststoffimprägnierten Breitfaserbandes und eine aus Abschnitten des Breitfaserbandes erhältliche Mehrschichtverbundstruktur. Als Kunststoffmatrix können sowohl duroplastische als auch thermoplastische Kunststoffe verwendet werden. DE 10 2012 200 059 A1 beschreibt einen faserverstärkten Mehrschichtverbundwerkstoff, dessen Kunststoffmatrix ein thermoplastischer Kunststoff ist. Allerdings sind die aus dem Stand der Technik bekannten Mehrschichtverbundwerkstoffe hinsichtlich ihrer optischen, klanglichen, haptischen und mechanischen Eigenschaften stark verbesserungswürdig, insbesondere, wenn es darum geht, für den Einsatz in Sportartikeln, Sportausrüstungen u.ä., vorteilhafte Eigenschaften aufzuweisen.

Die Aufgabe der vorliegenden Erfindung besteht somit darin, ein neues Material bereit zu stellen, das aufgrund seiner spezifischen Eigenschaften für den Einsatz in Sportartikeln, Sportausrüstungen, sowie im Bereich Fahrrädern geeignet ist. Hierfür sollte das Material darüber hinaus leichtgewichtig sein und sich kostengünstig herstellen lassen. Es wäre ferner wünschenswert, wenn das Material eine möglichst glatte und optisch ansprechende Oberfläche hätte. Des Weiteren soll ein Verfahren zur Herstellung des neuen Materials bereitgestellt werden, welches sich durch eine besonders vorteilhafte Kombination der einzelnen Verfahrensparameter auszeichnet, so dass sich das neue Material einfach, effizient und in möglichst hoher und gleichbleibender Qualität herstellen lässt.

Diese Aufgaben werden gelöst durch das erfindungsgemäße Verfahren zur Herstellung eines Mehrschichtverbundwerkstoffes enthaltend mindestens zwei flächig und stoffschlüssig übereinander liegende Lagen Verbundwerkstoff, wobei die mindestens eine erste Lage Verbundwerkstoff Endlosfasern enthält, wobei die Endlosfasern innerhalb dieser mindestens einen Lage unidirektional ausgerichtet sind und in einem auf thermoplastischem Polyurethan basierenden Kunststoff eingebettet sind, und die mindestens eine zweite Lage Verbundwerkstoff ein textiles Flächengebilde enthält, wobei das textile Flächengebilde in einem auf thermoplastischem Polyurethan basierenden Kunststoff eingebettet ist, mindestens umfassend die folgenden Schritte:

(A) Bereitstellen mindestens einer ersten Lage Verbundwerkstoff enthaltend Endlosfasern, wobei die Endlosfasern innerhalb dieser mindestens einen ersten Lage unidirektional ausgerichtet sind und in einem auf thermoplastischen Polyurethan basierenden Kunststoff eingebettet sind, wobei der Faservolumenanteil der mindestens einen ersten Lage Verbundwerkstoff 10 bis 45 Vol.-% beträgt,

(B) flächiges Aufbringen mindestens eines textilen Flächengebildes auf die mindestens eine erste Lage Verbundwerkstoff aus Schritt (A), um ein Halbzeug enthaltend mindestens eine erste Lage Verbundwerkstoff und mindestens ein textiles Flächengebilde zu erhalten, und

(C) Verpressen des Halbzeugs aus Schritt (B) bei einem Druck von 2 bis 40 bar(a), einer Temperatur T von 130 bis 290 °C für eine Zeit von 30 bis 600 s, um den Mehrschichtverbundwerkstoff mit einem Faservolumenanteil von 25 bis 55 Vol.-% zu erhalten.

Die Aufgaben werden des Weiteren gelöst durch einen erfindungsgemäßen Mehrschichtverbundwerkstoffs enthaltend mindestens zwei flächig und stoffschlüssig übereinander liegende Lagen Verbundwerkstoff, wobei die mindestens eine erste Lage Verbundwerkstoff Endlosfasern enthält, wobei die Endlosfasern innerhalb dieser mindestens einen Lage unidirektional ausgerichtet sind und in einem auf thermoplastischen Polyurethan basierenden Kunststoff eingebettet sind, und die mindestens eine zweite Lage Verbundwerkstoff ein textiles Flächengebilde enthält, wobei das textile Flächengebilde in einem auf thermoplastischem Polyurethan basierenden Kunststoff eingebettet ist, ein erfindungsgemäßes Teil für den Einsatz im Automobilbereich, in Gepäckstücken, als Verstärkungselemente in Bekleidung oder Sportausrüstung, wobei die genannten Teile mindestens einen erfindungsgemäßen Mehrschichtverbundwerkstoff aufweisen, die erfindungsgemäße Verwendung des erfindungsgemäßen Mehrschichtverbundwerkstoffs und das erfindungsgemäße Verfahren zur Herstellung eines solchen Teils.

Die vorliegende Erfindung wird im Folgenden detailliert beschrieben.

Schritt (A) des erfindungsgemäßen Verfahrens umfasst das Bereitstellen mindestens einer ersten Lage Verbundwerkstoff enthaltend Endlosfasern, wobei die Endlosfasern innerhalb dieser mindestens einen ersten Lage unidirektional ausgerichtet sind und in einem auf thermoplastischem Polyurethan basierenden Kunststoff eingebettet sind, wobei der Faservolumenanteil der mindestens einen ersten Lage Verbundwerkstoff 10 bis 45 Vol.-%, bevorzugt 15 bis 30 Vol.-%, besonders bevorzugt 17 bis 29 Vol.-%, beträgt.

Der Begriff "Endlosfaser" ist im Sinne der Erfindung als Abgrenzung zu den dem Fachmann ebenfalls bekannten Kurz- oder Langfasern zu verstehen. Endlosfasern erstrecken sich in der Regel über die gesamte Länge der Lage Verbundwerkstoff. Der Begriff Endlosfaser leitet sich davon ab, dass diese Fasern auf einer Rolle aufgewickelt vorliegen und während der Herstellung der einzelnen Verbundwerkstofflagen bevorzugt abgewickelt und mit Kunststoff imprägniert werden, so dass, mit Ausnahme von gelegentlichem Bruch oder Rollenwechsel, ihre Länge üblicherweise im Wesentlichen mit der Länge der hergestellten Verbundwerkstofflage übereinstimmt.

In der mindestens einen ersten Lage liegen erfindungsgemäß Endlosfasern vor. Erfindungsgemäß bevorzugt sind die vorliegenden Endlosfasern ausgewählt aus der Gruppe bestehend aus Glasfasern, Carbonfasern, Basaltfasern, Kunststofffasern, Spezialfasern und Mischungen davon, insbesondere Carbonfasern.

Weiter bevorzugt sind die als Endlosfasern eingesetzten Kunststoffasern ausgewählt aus der Gruppe bestehend aus Liquid-Crystal-Polymer-Fasern, Aramidfasern, Polyphenylensulfid-Fasern, Polyetherketon-Fasern, Polyetheretherketon-Fasern, Polyetherimid-Fasern und Mischungen davon.

Es hat sich für bestimmte Ausführungsformen der Erfindung als bevorzugt erwiesen, Endlosfasern, insbesondere Carbonfasern, mit einem E-Modul von größer 240 GPa, bevorzugt größer 245 GPa, besonders bevorzugt von 250 GPa oder mehr einzusetzen. Solche Kohlenstofffasern sind beispielsweise unter der Bezeichnung Pyrofil von der Firma Mitsubishi Rayon CO., LtD. im Handel erhältlich. Praktische Versuche haben gezeigt, dass sich diese Carbonfasern durch eine besonders gute Spreizbarkeit bei der Verarbeitung zu einer erfindungsgemäßen Verbundwerkstofflage auszeichnen.

In der mindestens einen ersten Lage liegen die vorliegenden Endlosfasern unidirektional ausgerichtet vor. Im Rahmen der vorliegenden Erfindung bedeutet "unidirektional", dass die Endlosfasern im Wesentlichen der Länge nach in eine Richtung zeigen und damit die gleiche Laufrichtung aufweisen. Mit "im Wesentlichen unidirektional" ist hier gemeint, dass eine Abweichung der Faserlaufrichtung von bis zu 5% möglich ist. Bevorzugt beträgt die Abweichung der Faserlaufrichtung jedoch deutlich unter 3%, besonders bevorzugt deutlich unter 1%.

Die in Schritt (A) des erfindungsgemäßen Verfahrens eingesetzte mindestens eine erste Lage weist im Allgemeinen eine Dicke von 30 bis 1000 $\mu$m, bevorzugt 50 bis 500 $\mu$m, besonders bevorzugt 80 bis 300 $\mu$m, auf.

Die in Schritt (A) des erfindungsgemäßen Verfahrens mindestens eine erste Lage weist im Allgemeinen einen Fasergehalt von 10 bis 45 Vol.-%, bevorzugt 15 bis 30 Vol.-%, besonders bevorzugt 17 bis 29 Vol.-%, auf.

Die erfindungsgemäß eingesetzte mindestens eine erste Lage kann mit den üblichen dem Fachmann bekannten Verfahren zur Herstellung von Faserverbundwerkstoffen hergestellt werden.

Gemäß einer bevorzugten Ausführungsform der Erfindung ist die erste Lage Verbundwerkstoff herstellbar durch Auftragen eines geschmolzenen auf thermoplastischem Polyurethan basierenden Kunststoffs auf ein vorgeheiztes Endlos-Faserband unter Druck-Scher-Vibrationsbeaufschlagung. Ein ähnliches Herstellungsverfahren ist in DE 10 2011 005 462 B3 beschrieben. Unter einem Endlos-Faserband wird erfindungsgemäß eine Mehrzahl von zusammengeführten Rovings verstanden, wobei es sich bei den Rovings um Bündel aus vielen Endlosfasern ohne Drall handelt.

Die mindestens eine erste Lage Verbundwerkstoff kann im Allgemeinen in allen dem Fachmann bekannten Größen und Formen vorgelegt werden. Die mindestens eine erste Lage, die in Schritt (A) des erfindungsgemäßen Verfahrens bereitgestellt wird, ist beispielsweise eckig, rund oder komplex geformt. In einer bevorzugten Ausführungsform ist die mindestens eine erste Lage rechteckig geformt.

Die mindestens eine erste Lage, die in Schritt (A) des erfindungsgemäßen Verfahrens bereitgestellt wird, weist beispielsweise eine Fläche von 1 bis 5000 m$^2$, bevorzugt 10 bis 1000 m$^2$, auf.

Als ein auf thermoplastischem Polyurethan basierender Kunststoff wird im Rahmen der vorliegenden Erfindung ein Kunststoff verstanden, der mindestens 50 Gew.-%, vorzugsweise mindestens 60 Gew.-%, bevorzugt mindestens 70 Gew.-%, insbesondere mindestens 80 Gew.-%, besonders bevorzugt mindestens 90 Gew.-%, ganz besonders bevorzugt mindestens 95 Gew.-%, insbesondere mindestens 97 Gew.-%, Polyurethan enthält. Anders ausgedrückt kann ein auf thermoplastischem Polyurethan basierender Kunststoff im Rahmen der vorliegenden Erfindung höchstens 50 Gew.-%, vorzugsweise höchstens 40 Gew.-%, bevorzugt höchstens 30 Gew.-%, insbesondere höchstens 20 Gew.-%, besonders bevorzugt höchstens 10 Gew.-%, ganz besonders bevorzugt höchstens 5 Gew.-%, insbesondere höchstens 3 Gew.-%, einen oder mehrere von Polyurethan verschiedene Kunststoffe als Blendpartner enthalten.

Gemäß einer besonderen Ausführungsform besteht der auf thermoplastischem Polyurethan basierende Kunststoff im Wesentlichen, insbesondere zu 80 bis 99 Gew.-%, bevorzugt 95 bis 99 Gew.-%, aus thermoplastischem Polyurethan, wobei neben dem thermoplastischem Polyurethan geringe Mengen Zuschlagstoffe wie beispielsweise UV-Stabilisatoren vorliegen können.

Wenn im Rahmen der vorliegenden Erfindung von thermoplastischem Polyurethan die Rede ist, so sind damit auch Mischungen verschiedener thermoplastischer Polyurethane gemeint. Die thermoplastischen Polyurethane können ferner in bekannter Weise linear oder verzweigt sein.

Gemäß einer besonderen Ausführungsform der Erfindung besteht der auf thermoplastischem Polyurethan basierende Kunststoff zu 80 Gew.-%, 90 Gew.-% oder im Wesentlichen, insbesondere zu 100 Gew.-%, aus einem linearen thermoplastischen Polyurethan.

Thermoplastische Polyurethane (TPU) sind dem Fachmann an sich bekannt und wegen ihrer guten elastomeren Eigenschaften und thermoplastischen Verarbeitbarkeit von großer technischer Bedeutung. Eine Übersicht über die Herstellung, Eigenschaften und Anwendungen von TPU ist z.B. im Kunststoff Handbuch [G. Becker, D. Braun], Band 7 "Polyurethane", München, Wien, Carl Hanser Verlag, 1983, gegeben.

TPU werden zumeist aus linearen Polyolen (Makrodiolen), wie Polyester-, Polyether- oder Polycarbonatdiolen, organischen Diisocyanaten und kurzkettigen, zumeist difunktionellen Alkoholen (Kettenverlängerern) aufgebaut. Sie können kontinuierlich oder diskontinuierlich hergestellt werden. Die bekanntesten Herstellverfahren sind das Bandverfahren, siehe beispielsweise GB-A 1 057 018, und das Extruderverfahren, siehe beispielsweise DE-A 19 64 834.

Die eingesetzten thermoplastischen Polyurethane sind bevorzugt Reaktionsprodukte aus

I) organischen Diisocyanaten
II) Polyolen
III) Kettenverlängerern.

Als Diisocyanate (I) können erfindungsgemäß aromatische, aliphatische, araliphatische, heterocyclische und cycloaliphatische Diisocyanate oder Gemische dieser Diisocyanate verwendet werden, siehe beispielsweise HOUBEN-WEYL "Methoden der organischen Chemie", Band E20 "Makromolekulare Stoffe", Georg Thieme Verlag, Stuttgart, New York 1987, Seiten 1587 bis 1593 oder Justus Liebigs Annalen der Chemie, 562, Seiten 75 bis 136.

Im Einzelnen seien beispielhaft genannt: aliphatische Diisocyanate, wie Hexamethylendiisocyanat, cycloaliphatische Diisocyanate, wie Isophorondiisocyanat, 1,4-Cyclohexandiisocyanat, 1-Methyl-2,4-cyclohexan-diisocyanat und 1-Methyl-2,6-cyclohexan-diisocyanat sowie die entsprechenden Isomerengemische, 4,4'-Dicyclohexylmethan-diisocyanat, 2,4'-Dicyclohexylmethan-diisocyanat und 2,2'-Dicyclohexylmethan-diisocyanat sowie die entsprechenden Isomerengemische, aromatische Diisocyanate, wie 2,4-Toluylendiisocyanat, Gemische aus 2,4-Toluylendiisocyanat und 2,6-Toluylendiisocyanat, 4,4'-Diphenylmethandiisocyanat, 2,4'-Diphenylmethandiisocyanat und 2,2'-Diphenylmethandiisocyanat, Gemische aus 2,4'-Diphenylmethandiisocyanat und 4,4'-Diphenylmethandiisocyanat, urethanmodifizierte flüssige 4,4'-Diphenylmethandiisocyanate und 2,4'-Diphenylmethandiisocyanate, 4,4'-Diisocyanatodiphenyl-ethan-(1,2) und 1,5-Naphthylendiisocyanat. Vorzugsweise verwendet werden 1,6-Hexamethylendiisocyanat, Isophorondiisocyanat, Dicyclohexylmethandiisocyanat, Diphenylmethandiisocyanat-Isomerengemische mit einem 4,4'-Diphenylmethandiisocyanatgehalt von >96 Gew.-% und insbesondere 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 Gew.-% (berechnet auf die Gesamtmenge an Diisocyanat) eines Polyisocyanates verwendet werden, beispielsweise Triphenylmethan-4,4',4"-triisocyanat oder Polyphenylpolymethylen-polyisocyanaten.

Polyole (II) sind beispielsweise solche mit im Mittel mindestens 1,8 bis höchstens 3,0 zerewitinoff-aktiven Wasserstoffatomen und einem zahlenmittleren Molekulargewicht $\overline{M}_n$ von 500 bis 10000 g/mol, vorzugsweise 500 bis 6000 g/mol.

Eingeschlossen sind neben Aminogruppen, Thiolgruppen oder Carboxylgruppen aufweisenden Verbindungen insbesondere zwei bis drei, bevorzugt zwei Hydroxylgruppen aufweisende Verbindungen, speziell solche mit zahlenmittleren Molekulargewichten $\overline{M}_n$ von 500 bis 10000 g/mol, besonders bevorzugt solche mit einem zahlenmittleren Molekulargewicht $\overline{M}_n$ von 500 bis 6000 g/mol; z.B. Hydroxylgruppen aufweisende Polyester, Polyether, Polycarbonate und Polyesteramide oder Gemische aus diesen.

Geeignete Polyether-Diole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2-Butylenoxid und 2,3-Butylenoxid. Vorzugsweise Anwendung finden Ethylenoxid, Propylenoxid und Mischungen aus 1,2-Propylenoxid und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyldiethanolamine, beispielsweise N-Methyl-diethanolamin und Diole wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherole sind ferner die hydroxylgruppenhaltigen Polymerisationsprodukte des Tetrahydrofurans. Es können auch trifunktionelle Polyether in Anteilen von 0 bis 30 Gew.-% bezogen auf die bifunktionellen Polyether eingesetzt werden, jedoch höchstens in solcher Menge, dass ein noch thermoplastisch verarbeitbares Produkt entsteht. Die im Wesentlichen linearen Polyether-Diole besitzen vorzugsweise zahlenmittlere Molekulargewichte $\overline{M}_n$ von 500 bis 10000 g/mol, besonders bevorzugt 500 bis 6000 g/mol. Sie können sowohl einzeln als auch in Form von Mischungen untereinander zur Anwendung kommen.

Geeignete Polyester-Diole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren wie Bernsteinsäure, Glutarsäure, Adipinsäure, Korksäure, Azelainsäure und Sebacinsäure, oder aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyester-Diole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, z.B. Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol oder Dipropylenglykol. Je nach den gewünschten Eigenschaften können die mehrwertigen Alkohole allein oder in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von ω-Hydroxycarbonsäuren wie ω-Hydroxycapronsäure oder Polymerisationsprodukte von Lactonen, z.B. gegebenenfalls substituierten ω-Caprolactonen. Als Polyester-Diole vorzugsweise verwendet werden Ethandiol-polyadipate, 1,4-Butandiolpolyadipate, Ethandiol-1,4-butandiolpolyadipate, 1,6-Hexandiol-neopentylglykolpolyadipate, 1,6-Hexandiol-1,4-butandiolpolyadipate und Polycaprolactone. Die Polyester-Diole besitzen mittlere Molekulargewichte $\overline{M}_n$ von 500 bis 10000 g/mol, besonders bevorzugt 600 bis 6000 g/mol und können einzeln oder in Form von Mischungen untereinander zur Anwendung kommen.

Kettenverlängerer (III) sind sogenannte Zerewitinoff-aktive Polyole und besitzen im Mittel 1,8 bis 3,0 zerewitinoff-aktive Wasserstoffatome und haben ein zahlenmittleres Molekulargewicht von 60 bis 500 g/mol. Hierunter versteht man neben Aminogruppen, Thiolgruppen oder Carboxylgruppen aufweisenden Verbindungen solche mit zwei bis drei, bevorzugt zwei Hydroxylgruppen.

Als Kettenverlängerungsmittel werden beispielsweise Diole oder Diamine mit einem Molekulargewicht von 60 bis 495 g/mol eingesetzt, vorzugsweise werden aliphatische Diole mit 2 bis 14 Kohlenstoffatomen eingesetzt, wie z.B. Ethandiol, 1,2-Propandiol, 1,3-Propandiol, 1,4-Butandiol, 2,3-Butandiol, 1,5-Pentandiol, 1,6-Hexandiol, Diethylenglykol und Dipropylenglykol. Geeignet sind jedoch auch Diester der Terephthalsäure mit Glykolen mit 2 bis 4 Kohlenstoffatomen, z.B. Terephthalsäure-bis-ethylenglykol oder Terephthalsäure-bis-1,4-butandiol, Hydroxyalkylenether des Hydrochinons, z.B. 1,4-Di(β-hydroxyethyl)-hydrochinon, ethoxylierte Bisphenole, z.B. 1,4-Di(β-hydroxyethyl)-bisphenol A, (cyclo)-aliphatische Diamine, wie Isophorondiamin, Ethylendiamin, 1,2-Propylendiamin, 1,3-Propylendiamin, N-Methyl-propylen-1,3-diamin, N,N'-Dimethylethylendiamin und aromatische Diamine, wie 2,4-Toluylendiamin, 2,6-Toluylendiamin, 3,5-Diethyl-2,4-toluylendiamin oder 3,5-Diethyl-2,6-toluylendiamin oder primäre mono-, di-, tri- oder tetraalkylsubstituierte 4,4'-Diaminodiphenylmethane. Besonders bevorzugt werden als Kettenverlängerer Ethandiol, 1,4-Butandiol, 1,6-Hexandiol, 1,4-Di(β-hydroxyethyl)-hydrochinon oder 1,4-Di(β-hydroxyethyl)-bisphenol A verwendet. Es können auch Gemische der oben genannten Kettenverlängerer eingesetzt werden. Daneben können auch kleinere Mengen an Triolen zugesetzt werden.

Gegenüber Isocyanaten monofunktionelle Verbindungen können in Anteilen bis zu 2 Gew.-%, bezogen auf thermoplastisches Polyurethan, als sogenannte Kettenabbrecher oder Entformungshilfen eingesetzt werden. Geeignet sind z.B. Monoamine wie Butyl- und Dibutylamin, Octylamin, Stearylamin, N-Methylstearylamin, Pyrrolidin, Piperidin oder Cyclohexylamin, Monoalkohole wie Butanol, 2-Ethylhexanol, Octanol, Dodecanol, Stearylalkohol, die verschiedenen Amylalkohole, Cyclohexanol und Ethylenglykolmonomethylether.

Die relativen Mengen der Verbindungen (II) und (III) werden bevorzugt so gewählt, dass das Verhältnis der Summe der Isocyanatgruppen in (I) zu der Summe der zerewitinoffaktiven Wasserstoffatome in (II) und (III) 0,85:1 bis 1,2:1, bevorzugt 0,95:1 bis 1,1:1, beträgt.

Die erfindungsgemäß eingesetzten, thermoplastischen Polyurethane (TPU) können als Hilfs- und Zusatzstoffe bis zu maximal 20 Gew.-%, bezogen auf die Gesamtmenge an TPU, der üblichen Hilfs- und Zusatzstoffe enthalten. Typische Hilfs- und Zusatzstoffe sind beispielsweise Katalysatoren, Pigmente, Farbstoffe, Flammschutzmittel, Stabilisatoren gegen Alterungs- und Witterungseinflüsse, Weichmacher, Gleit- und Entformungsmittel, fungistatisch und bakteriostatisch wirkende Substanzen sowie Füllstoffe und deren Mischungen.

Geeignete Katalysatoren sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylamino-ethoxy)ethanol, Diazabicyclo[2,2,2]octan und ähnliche sowie insbesondere organische Metallverbindungen wie Titansäureester, Eisenverbindungen oder Zinnverbindungen wie Zinndiacetat, Zinndioctoat, Zinndilaurat oder die Zinndialkylsalze aliphatischer Carbonsäuren wie Dibutylzinndiacetat oder Dibutylzinndilaurat oder ähnliche. Bevorzugte Katalysatoren sind organische Metallverbindungen, insbesondere Titansäureester, Eisen- und Zinnverbindungen. Die Gesamtmenge an Katalysatoren in den TPU beträgt in der Regel etwa 0 bis 5 Gew.-%, bevorzugt 0 bis 2 Gew.-%, bezogen auf die Gesamtmenge an TPU.

Beispiele für weitere Zusatzstoffe sind Gleitmittel, wie Fettsäureester, deren Metallseifen, Fettsäureamide, Fettsäureesteramide und Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische und/oder organische Füllstoffe und Verstärkungsmittel. Verstärkungsmittel sind insbesondere faserartige Verstärkungsstoffe wie z.B. anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff-Additive von R.Gächter u. H.Müller (Hanser Verlag München 1990) oder der DE-A 29 01 774 zu entnehmen.

Weitere Zusätze, die in das TPU eingearbeitet werden können, sind Thermoplaste, beispielsweise Polycarbonate und Acrylnitril/Butadien/Styrol-Terpolymere, insbesondere ABS. Auch andere Elastomere wie Kautschuk, Ethylen/Vinylacetatcopolymere, Styrol/Butadiencopolymere sowie andere TPU können verwendet werden.

Weiterhin zur Einarbeitung geeignet sind handelsübliche Weichmacher wie Phosphate, Phthalate, Adipate, Sebacate und Alkylsulfonsäureester.

Die thermoplastischen Polyurethane können alleine oder als Mischung von thermoplastischen Polyurethanen vorliegen. Es ist auch möglich das Polyurethan oder die Mischung von thermoplastischen Polyurethanen gemeinsam mit einem oder mehreren von thermoplastischem Polyurethan verschiedenen Kunststoffen als Blendpartner, siehe oben, einzusetzen.

Erfindungsgemäß bevorzugt eingesetzte auf thermoplastischem Polyurethan basierende Kunststoffe weisen im Allgemeinen eine Schmelzviskosität auf, die eine gute Verarbeitbarkeit gemäß der vorliegenden Erfindung gewährleistet.

Eine bevorzugte Ausführungsform für das thermoplastische Polyurethan basiert auf aliphatischem Polycarbonatdiol aus der Gruppe der Polyester-Polyole und weist einen hohen E-Modul größer gleich 1000 MPa, bevorzugt 1500 MPa, besonders bevorzugt 2000 MPa auf. Dieser mechanische Parameter kann durch Zugprüfung mit einer dem Fachmann bekannten mechanischen Zugprüfmaschine ermittelt werden. Weiter bevorzugt ist ein hoher Anteil an Hartsegmenten im thermoplastischen Polyurethan, welcher eine Shore-D-Härte größer 50D, bevorzugt 65D, besonders bevorzugt 80D, erzeugt. Die Shore-D-Härte kann mittels dem Fachmann bekannten Härtemessgerät ermittelt werden.

Die in Schritt (A) des erfindungsgemäßen Verfahrens eingesetzte erste erfindungsgemäße Lage weist Endlosfasern auf, die innerhalb der Lage unidirektional ausgerichtet sind und in einem auf Polyurethan basierenden Kunststoff eingebettet sind. Die Endlosfasern erstrecken sich dabei insbesondere im Wesentlichen über die gesamte Länge der Lage Verbundwerkstoff.

Die in Schritt (A) des erfindungsgemäßen Verfahrens bereitgestellte mindestens eine erste Lage kann symmetrisch oder asymmetrisch aufgebaut sein. "Symmetrisch" bedeutet in diesem Zusammenhang, dass die vorhandenen Endlosfasern von beiden Seiten in im Wesentlichen gleichen Mengen eines auf thermoplastischem Polyurethan basierenden Kunststoffes eingebettet sind. "Asymmetrisch" bedeutet in diesem Zusammenhang, dass die vorhandenen Endlosfasern von beiden Seiten mit unterschiedlichen Mengen eines auf thermoplastischem Polyurethan basierenden Kunststoffes eingebettet sind, so dass die Endlosfasern näher an der Oberfläche der einen Seite der ersten Lage liegen als an der Oberfläche der anderen Seite der ersten Lage, siehe dazu auch EP 2 788 408 A1.

In einer bevorzugten Ausführungsform werden in Schritt (A) des erfindungsgemäßen Verfahrens 2, 3, 4 oder mehr erste Lagen, insbesondere übereinander liegend, bereitgestellt. In dieser bevorzugten Ausführungsform können die in den 2, 3, 4 oder mehr ersten Lagen vorliegenden unidirektional ausgerichteten Endlosfasern entweder in die gleiche Richtung orientiert sein, d.h. der Winkel zwischen Endlosfasern aus zwei übereinander liegenden ersten Lagen beträgt im Wesentlichen 0°, oder die unidirektional orientierten Endlosfasern der einzelnen ersten Lagen sind nicht, zumindest nicht alle, in die gleiche Richtung orientiert, d.h. der Winkel zwischen Endlosfasern aus zwei entsprechenden verschiedenen ersten Lagen beträgt im Wesentlichen nicht 0°.

Beispielsweise können die Endlosfasern in den ersten Lagen um 30°, 40°, 50°, 60°, 70°, 80°, 90°, 100°, 110°, 120°, 130° gegeneinander rotiert sein. Dabei kann die Orientierung in jedem Fall um ±5°, bevorzugt um ±3°, besonders bevorzugt um ±1° von den genannten Richtwerten abweichen.

Besonders bevorzugt werden in Schritt (A) des erfindungsgemäßen Verfahrens 2, 3, 4 oder mehr erste Lagen vorgelegt, wobei die unidirektional orientierten Endlosfasern der benachbarten Lagen bevorzugt einen Winkel von 30 bis 130°, besonders bevorzugt 60 bis 120°, ganz besonders bevorzugt 80 bis 100°, beispielsweise 80°, 90° oder 100°, zueinander bilden.

Werden in Schritt (A) des erfindungsgemäßen Verfahrens mehr als eine erste Lage Verbundwerkstoff bereitgestellt, so können die einzelnen Lagen im Wesentlichen gleich oder unterschiedlich, bevorzugt im Wesentlichen gleich, aufgebaut sein.

Unter einem im Wesentlichen gleichen Aufbau der Lagen Verbundwerkstoff wird im Rahmen der Erfindung verstanden, dass mindestens ein Merkmal aus der Gruppe chemische Zusammensetzung, Faservolumengehalt und Schichtdicke gleich ist. Unter chemischer Zusammensetzung werden erfindungsgemäß die chemische Zusammensetzung der Kunststoffmatrix des Verbundwerkstoffs und/oder die chemische Zusammensetzung der Endlosfasern verstanden.

Schritt (B) des erfindungsgemäßen Verfahrens umfasst das flächige Aufbringen mindestens eines textilen Flächengebildes auf die mindestens eine erste Lage Verbundwerkstoff aus Schritt (A), um ein Halbzeug enthaltend mindestens eine erste Lage Verbundwerkstoff und mindestens ein textiles Flächengebilde zu erhalten.

Das in Schritt (B) des erfindungsgemäßen Verfahrens aufgebrachte mindestens eine textile Flächengebilde kann im Allgemeinen jedes dem Fachmann bekannte textile Flächengebilde sein.

Erfindungsgemäß bevorzugt ist das erfindungsgemäße vorliegende textile Flächengebilde ausgewählt aus der Gruppe bestehend aus Geweben, Gelegen, Vliesen, Geflechten, Maschenwaren, Gewirken und Kombination davon. Erfindungsgemäß bevorzugt wird als textiles Flächengebilde ein Gewebe eingesetzt.

Die Dicke des erfindungsgemäß eingesetzten Gewebes beträgt im Allgemeinen 30 bis 1000 µm, bevorzugt 100 bis 500 µm, besonders bevorzugt 200 bis 400 µm.

Im Allgemeinen weist das erfindungsgemäß eingesetzte Gewebe ein Flächengewicht von 50 bis 300 g/m$^2$, bevorzugt 120 bis 280 g/m$^2$, besonders bevorzugt 150 bis 250 g/m$^2$, auf.

Das erfindungsgemäß eingesetzte textile Flächengebilde, insbesondere das Gewebe, kann im Allgemeinen aus jedem dem Fachmann bekannten Material bestehen bzw. dieses enthalten, so lange es eine genügend hohe Kompatibilität mit dem eingesetzten auf Polyurethan basierenden Kunststoff aufweist. Bevorzugte Materialien sind ausgewählt aus der Gruppe bestehend aus Glasfasern, Carbonfasern, Basaltfasern, Kunststofffasern, Spezialfasern und Mischungen davon, insbesondere Carbonfasern.

Weiter bevorzugt sind die in Geweben eingesetzten Kunststofffasern ausgewählt aus der Gruppe bestehend aus Liquid-Crystal-Polymer-Fasern, Aramidfasern, Polyphenylensulfid-Fasern, Polyetherketon-Fasern, Polyetheretherketon-Fasern, Polyetherimid-Fasern und Mischungen davon.

Bevorzugt weist das erfindungsgemäß eingesetzte textile Flächengebilde, insbesondere das Gewebe, an der Oberfläche der einzelnen Fasern ein dem Fachmann bekanntes "Sizing" auf, welches beispielsweise die Verarbeitbarkeit und/oder die Wechselwirkung mit dem Matrixmaterial verbessert.

Erfindungsgemäß ist es auch möglich und bevorzugt, dass die mindestens eine erste Lage Verbundwerkstoff über der mindestens einen zweiten Lage Verbundwerkstoff flächig und stoffschlüssig angeordnet ist und auf der mindestens einen ersten Lage Verbundwerkstoff mindestens eine dritte Lage Verbundwerkstoff flächig und stoffschlüssig angeordnet ist, und die mindestens eine dritte Lage Verbundwerkstoff ein textiles Flächengebilde enthält, wobei das textile Flächengebilde in einem auf thermoplastischem Polyurethan basierenden Kunststoff eingebettet ist.

In dieser Ausführungsform liegt neben der mindestens einen ersten Lage und der mindestens einen zweiten Lage mindestens eine dritte Lage Verbundwerkstoff vor, die ein textiles Flächengebilde enthält, wobei das textile Flächengebilde in einem auf thermoplastischem Polyurethan basierenden Kunststoff eingebettet ist. Geeignete und bevorzugte textile Flächengebilde und Kunststoffe sind bereits genannt worden und gelten hier entsprechend.

Zur Herstellung dieses bevorzugten erfindungsgemäßen Mehrschichtverbundwerkstoffes wird daher in Schritt (B) des erfindungsgemäßen Verfahrens mindestens ein textiles Flächengebilde auf die mindestens eine erste Lage Verbundwerkstoff aus Schritt (A) und mindestens ein weiteres textiles Flächengebilde auf die gegenüberliegende Seite der mindestens einen ersten Lage flächig aufgebracht, um ein Halbzeug enthaltend mindestens eine erste Lage Verbundwerkstoff, mindestens ein textiles Flächengebilde auf der einen Seite der mindestens einen ersten Lage und mindestens ein weiteres textiles Flächengebilde auf der gegenüberliegenden Seite der mindestens einen ersten Lage zu erhalten. Erfindungsgemäß können die textilen Flächengebilde und/oder die ersten Lagen gleich oder unterschiedlich sein, bevorzugt sind sie gleich.

In einer weiteren bevorzugten Ausführungsform betrifft die vorliegende Erfindung den erfindungsgemäßen Mehrschichtverbundwerkstoff, wobei die mindestens eine erste Lage Verbundwerkstoff über der mindestens einen zweiten Lage Verbundwerkstoff flächig und stoffschlüssig angeordnet ist und unter der mindestens einen zweiten Lage Verbundwerkstoff mindestens eine weitere erste Lage Verbundwerkstoff flächig und stoffschlüssig angeordnet ist. In dieser Ausführungsform liegt neben der mindestens einen ersten Lage und der mindestens einen zweiten Lage mindestens eine weitere erste Lage Verbundwerkstoff vor.

Zur Herstellung dieses bevorzugten erfindungsgemäßen Mehrschichtverbundwerkstoffes wird daher in Schritt (B) des erfindungsgemäßen Verfahrens mindestens ein textiles Flächengebilde zwischen mindestens zwei erste Lagen Verbundwerkstoff aus Schritt (A) flächig angebracht, um ein Halbzeug enthaltend mindestens ein textiles Flächengebilde zwischen mindestens zwei ersten Lagen, zu erhalten. Erfindungsgemäß können die textilen Flächengebilde und/oder die ersten Lagen gleich oder unterschiedlich sein, bevorzugt sind sie gleich.

Erfindungsgemäß werden in Schritt (B) des erfindungsgemäßen Verfahrens die mindestens eine erste Lage und das mindestens eine textile Flächengebilde flächig aufgebracht. "Flächig" bedeutet im Rahmen der vorliegenden Erfindung, dass die jeweiligen Lagen mindestens mit 60%, bevorzugt mindestens mit 70%, besonders bevorzugt mit mindestens 80%, insbesondere bevorzugt mit mindestens 90%, ganz besonders bevorzugt mit mindestens 95%, ihrer jeweiligen Flächen in Kontakt sind.

Gegebenenfalls in Schritt (B) des erfindungsgemäßen Verfahrens weitere Materiallagen zwischen den vorhandenen Schichten, insbesondere zwischen der mindestens einen ersten Lage und dem mindestens einen textilen Flächengebilde befinden. Beispielhaft seien hier weitere Lagen aus Kunststoff, der gleich oder verschieden von der in den Lagen verwendeten Kunststoffmatrix sein kann, genannt. Diese Kunststofflagen können insbesondere auch Füllstoffe, die von den erfindungsgemäß vorgesehenen Endlosfasern verschieden sind, enthalten. Ferner können auch Klebstoff-, Gewebe-, Vlies- oder Oberflächenvergütungslagen, beispielsweise Lackschichten im erfindungsgemäßen Mehrschichtverbundwerkstoff enthalten sein. Diese weiteren Lagen können zwischen innen- und außenliegenden Lagen, zwischen mehreren innenliegenden Lagen und/oder auf einer oder beiden der außenliegenden Lagen enthalten sein. Schritt (B) umfasst daher bevorzugt, dass entsprechende zusätzliche Lagen auf die mindestens eine erste Lage und/oder das mindestens eine textile Flächengebilde flächig aufgebracht werden.

Das nach Schritt (B) des erfindungsgemäßen Verfahrens erhaltene Halbzeug weist mindestens eine erste Lage und mindestens ein textiles Flächengebilde auf, die flächig aufeinander liegen. Bevorzugt wird dieses Halbzeug direkt in Schritt (C) des erfindungsgemäßen Verfahrens überführt, ohne dass weitere Verfahrensschritte erfolgen.

Schritt (C) des erfindungsgemäßen Verfahrens umfasst das Verpressen des Halbzeugs aus Schritt (B) bei einem Druck von 2 bis 40 bar(a), einer Temperatur T von 130 bis 290 °C für eine Zeit von 30 bis 600 s, um den Mehrschichtverbundwerkstoff mit einem Faservolumenanteil von 25 bis 55 Vol.-% zu erhalten.

Schritt (C) des erfindungsgemäßen Verfahrens kann im Allgemeinen in jeder dem Fachmann als geeignet erscheinenden Vorrichtung erfolgen, insbesondere in einer Intervallheißpresse, einer Doppelbandpresse oder in einer statischen Presse.

Insbesondere um die Außenseiten des erfindungsgemäßen Mehrschichtverbundwerkstoffs, insbesondere in Schritt (C), zu schützen, ist es bevorzugt, die Außenseiten des in Schritt (B) erhaltenen Halbzeugs vor Schritt (C) zu schützen. Dies kann erfindungsgemäß erfolgen, indem mindestens ein Trennfilm, mindestens einer Trennschicht, mindestens einem Trenngewebe oder eine Kombination von zwei oder mehreren davon flächig aufgebracht wird.

Die vorliegenden Erfindung betrifft daher bevorzugt das erfindungsgemäße Verfahren, wobei vor Schritt (C) an den Außenseiten des Halbzeugs jeweils mindestens ein Trennfilm, mindestens eine Trennschicht, mindestens ein Trenngewebe oder eine Kombination von zwei oder mehreren davon flächig aufgebracht wird. Beispiele für geeignete Trennschichten sind Glasfasergewebe, welche bevorzugt mit hochtemperaturbeständigen Kunststoffen, beispielsweise PTFE, beschichtet sind, chemisch behandelte oder beschichtete Stahlbänder, hochtemperaturbeständige Kunststofffolien, Trennpapiere, beispielsweise ein Papier oder mit mindestens einem Silikon beschichtetes Papier.

In einer bevorzugten Ausführungsform wird an den Außenseiten des Halbzeugs bevorzugt eine Trennschicht, beispielsweise ein Papier oder mit mindestens einem Silikon beschichtetes Papier, flächig aufgebracht.

Schritt (C) des erfindungsgemäßen Verfahrens erfolgt im Allgemeinen bei einem Druck von 2 bis 40 bar(a), bevorzugt 3 bis 30 bar(a), besonders bevorzugt 5 bis 20 bar(a).

Schritt (C) des erfindungsgemäßen Verfahrens erfolgt im Allgemeinen bei einer Temperatur T von 130 bis 290 °C, bevorzugt 170 bis 280 °C, besonders bevorzugt 210 bis 270 °C, ganz besonders bevorzugt 230 bis 260 °C.

Schritt (C) des erfindungsgemäßen Verfahrens erfolgt im Allgemeinen für eine Zeit von 30 bis 600 s, bevorzugt 120 bis 300 s, besonders bevorzugt 180 bis 220 s.

Besonders bevorzugt erfolgt Schritt (C) des erfindungsgemäßen Verfahrens bei einem Druck von 5 bis 20 bar(a), einer Temperatur T von 230 bis 260 °C für eine Zeit von 120 bis 300 s, weiter bevorzugt 180 bis 220 s.

In einer besonders bevorzugten Ausführungsform des erfindungsgemäßen Verfahrens erfolgt Schritt (C) in einer Intervallheißpresse, in der das zu verpressende Halbzeug für eine bestimmte Zeit, bevorzugt für 1 bis 20 s, besonders bevorzugt 3 bis 15 s, mit dem oben genannten Druck beaufschlagt wird, dann wird die Presse geöffnet und das zu verpressende Halbzeug wird eine bestimmte Strecke, beispielsweise 5 bis 50 mm, bevorzugt 10 bis 40 mm, vorgeschoben und anschließend wieder mit dem genannten Druck beaufschlagt. Dieser Vorgang wird 10 bis 40 Mal, bevorzugt 12 bis 35 Mal, wiederholt, so dass sich die Presszeiten im Wesentlichen zu den oben genannten Zeiten addieren. Die Vorschubgeschwindigkeit dieser Bewegung beträgt im Allgemeinen 1 bis 25 m/h, bevorzugt 5 bis 20 m/h.

Nach Schritt (C) wird der erfindungsgemäße Mehrschichtverbundwerkstoff erhalten. An Schritt (C) des erfindungsgemäßen Verfahrens können sich noch übliche Reinigungs- und Aufarbeitungsschritte anschließen, beispielsweise Entfernen der gegebenenfalls vorliegenden Trennschicht etc., Reinigung der Oberflächen und/oder Zuschneiden des Produktes.

Die vorliegende Erfindung betrifft auch den erfindungsgemäßen Mehrschichtverbundwerkstoff, herstellbar nach dem erfindungsgemäßen Verfahren.

Die vorliegende Erfindung betrifft des Weiteren auch einen Mehrschichtverbundwerkstoff enthaltend mindestens zwei flächig und stoffschlüssig übereinander liegende Lagen Verbundwerkstoff, wobei die mindestens eine erste Lage Verbundwerkstoff Endlosfasern enthält, wobei die Endlosfasern innerhalb dieser mindestens einen Lage unidirektional ausgerichtet sind und in einem auf thermoplastischem Polyurethan basierenden Kunststoff eingebettet sind, und die mindestens eine zweite Lage Verbundwerkstoff ein textiles Flächengebilde enthält, wobei das textile Flächengebilde in einem auf thermoplastischem Polyurethan basierenden Kunststoff eingebettet ist.

Details und bevorzugte Ausführungsformen zu dem auf thermoplastischem Polyurethan basierenden Kunststoff werden weiter oben bezüglich des erfindungsgemäßen Verfahrens bereits offenbart und gelten hier entsprechend.

In der mindestens einen ersten Lage liegen erfindungsgemäß Endlosfasern vor. Erfindungsgemäß bevorzugt sind die vorliegenden Endlosfasern ausgewählt aus der Gruppe bestehend aus Glasfasern, Carbonfasern, Basaltfasern, Kunststofffasern, Spezialfasern und Mischungen davon, insbesondere Carbonfasern.

Weiter bevorzugt sind die als Endlosfasern eingesetzten Kunststofffasern ausgewählt aus der Gruppe bestehend aus Liquid-Crystal-Polymer-Fasern, Aramidfasern, Polyphenylensulfid-Fasern, Polyetherketon-Fasern, Polyetheretherketon-Fasern, Polyetherimid-Fasern und Mischungen davon.

Es hat sich für bestimmte Ausführungsformen der Erfindung als bevorzugt erwiesen, Endlosfasern, insbesondere Carbonfasern, mit einem E-Modul von größer 240 GPa, bevorzugt größer 245 GPa, besonders bevorzugt von 250 GPa oder mehr einzusetzen. Solche Kohlenstofffasern sind beispielsweise unter der Bezeichnung Pyrofil von der Firma Mitsubishi Rayon CO., LtD. im Handel erhältlich. Praktische Versuche haben gezeigt, dass sich diese Carbonfasern durch eine besonders gute Spreizbarkeit bei der Verarbeitung zu einer erfindungsgemäßen Verbundwerkstofflage auszeichnen.

In der mindestens einen ersten Lage liegen die vorliegenden Endlosfasern unidirektional ausgerichtet vor. Im Rahmen der vorliegenden Erfindung bedeutet "unidirektional", dass die Endlosfasern im Wesentlichen der Länge nach in eine Richtung zeigen und damit die gleiche Laufrichtung aufweisen. Mit "im Wesentlichen unidirektional" ist hier gemeint, dass eine Abweichung der Faserlaufrichtung von bis zu 5% möglich ist. Bevorzugt beträgt die Abweichung der Faserlaufrichtung jedoch deutlich unter 3%, besonders bevorzugt deutlich unter 1%.

In dem erfindungsgemäßen Mehrschichtverbundwerkstoff weist die mindestens eine erste Lage im Allgemeinen eine Dicke von 30 bis 1000 $\mu$m, bevorzugt 50 bis 500 $\mu$m, besonders bevorzugt 80 bis 300 $\mu$m, auf.

Die mindestens eine erste Lage des erfindungsgemäßen Mehrschichtverbundwerkstoffs weist im Allgemeinen einen Fasergehalt von 10 bis 45 Vol.-%, bevorzugt 15 bis 30 Vol.-%, besonders bevorzugt 17 bis 29 Vol.-%, auf.

In dem erfindungsgemäßen Mehrschichtverbundwerkstoff weist die mindestens eine zweite Lage im Allgemeinen eine Dicke von 30 bis 1500 $\mu$m, bevorzugt 50 bis 1000 $\mu$m, besonders bevorzugt 150 bis 400 $\mu$m, auf.

Die mindestens eine zweite Lage des erfindungsgemäßen Mehrschichtverbundwerkstoffs weist im Allgemeinen einen Fasergehalt von 25 bis 55 Vol.-%, bevorzugt 35 bis 50 Vol.-%, auf.

Das in der erfindungsgemäß vorliegenden mindestens einen zweiten Lage vorhandene textile Flächengebilde kann im Allgemeinen aus allen dem Fachmann als geeignet erscheinenden textilen Flächengebilden ausgewählt sein, insbesondere ist das textile Flächengebilde ein Gewebe. Details und bevorzugte Ausführungsformen zu dem vorliegenden textilen Flächengebilde werden weiter oben bezüglich des erfindungsgemäßen Verfahrens bereits offenbart und gelten hier entsprechend.

In einer bevorzugten Ausführungsform betrifft die vorliegende Erfindung den erfindungsgemäßen Mehrschichtverbundwerkstoff, wobei die mindestens eine erste Lage Verbundwerkstoff über der mindestens einen zweiten Lage Verbundwerkstoff flächig und stoffschlüssig angeordnet ist und auf der mindestens einen ersten Lage Verbundwerkstoff mindestens eine dritte Lage Verbundwerkstoff flächig und stoffschlüssig angeordnet ist, und die mindestens eine dritte Lage Verbundwerkstoff ein textiles Flächengebilde enthält, wobei das textile Flächengebilde in einem auf thermoplastischem Polyurethan basierenden Kunststoff eingebettet ist.

In dieser Ausführungsform liegt neben der mindestens einen ersten Lage und der mindestens einen zweiten Lage mindestens eine dritte Lage Verbundwerkstoff vor, die ein textiles Flächengebilde enthält, wobei das textiles Flächengebilde in einem auf thermoplastischem Polyurethan basierenden Kunststoff eingebettet ist. Geeignete und bevorzugte textile Flächengebilde und Kunststoffe sind bereits zu der zweiten erfindungsgemäßen Lage Verbundwerkstoff genannt worden und gelten hier entsprechend.

In einer weiteren bevorzugten Ausführungsform betrifft die vorliegende Erfindung den erfindungsgemäßen Mehrschichtverbundwerkstoff, wobei die mindestens eine erste Lage Verbundwerkstoff über der mindestens einen zweiten Lage Verbundwerkstoff flächig und stoffschlüssig angeordnet ist und unter der mindestens einen zweiten Lage Verbundwerkstoff mindestens eine weitere erste Lage Verbundwerkstoff flächig und stoffschlüssig angeordnet ist.

In dieser Ausführungsform liegt die mindestens eine zweite Lage zwischen mindestens zwei ersten Lagen Verbundwerkstoff vor. Geeignete und bevorzugte textile Flächengebilde und Kunststoffe sind bereits zu der zweiten erfindungsgemäßen Lage Verbundwerkstoff genannt worden und gelten hier entsprechend.

In dieser Ausführungsform des erfindungsgemäßen Mehrschichtverbundwerkstoffes weist die mindestens eine zweite Lage im Allgemeinen eine Dicke von 200 bis 3000 $\mu$m, bevorzugt 200 bis 1500 $\mu$m, besonders bevorzugt 250 bis 1200 $\mu$m, ganz besonders bevorzugt 300 bis 1000 $\mu$m, auf.

Die mindestens eine dritte Lage des erfindungsgemäßen Mehrschichtverbundwerkstoffs weist im Allgemeinen einen Fasergehalt von 25 bis 55 Vol.-%, bevorzugt 35 bis 50, auf.

Erfindungsgemäß können die zweite Lage Verbundwerkstoff und dritte Lage Verbundwerkstoff gleich oder unterschiedlich sein. Bevorzugt sind diese in Bezug auf ihre Zusammensetzung, ihren Fasergehalt und ihre Schichtdicke im Wesentlichen gleich aufgebaut.

Gemäß einer besonderen Ausführungsform der Erfindung sind die in dem erfindungsgemäßen Mehrschichtverbundwerkstoff vorhandenen Lagen im Wesentlichen symmetrisch angeordnet, wobei weiter bevorzugt die vorliegenden ersten, zweiten und dritten Lagen innerhalb ihrer Gattung in Bezug auf mindestens ein Merkmal aus der Gruppe chemische Zusammensetzung, Faservolumen- bzw. Fasergehalt und Schichtdicke im Wesentlichen gleich aufgebaut sind.

Im Wesentlichen symmetrisch im Sinne der Erfindung bedeutet, dass die Verbundwerkstofflagen des Mehrschichtverbundwerkstoffs in Bezug auf eine, auf der Hälfte der durch die beiden außenliegenden Lagen Verbundwerkstoff nach außen begrenzten Dicke des Mehrschichtverbundwerkstoffs, parallel zu den Lagen Verbundwerkstoff verlaufenden Spiegelebene in Bezug auf mindestens ein Merkmal, vorzugsweise alle Merkmale, aus der Gruppe chemische Zusammensetzung, Faservolumen- bzw. Fasergehalt und Schichtdicke im Wesentlichen gleich aufgebaut sind.

Der erfindungsgemäße Mehrschichtverbundwerkstoff weist insgesamt einen Fasergehalt von im Allgemeinen 25 bis 55 Gew.-%, bevorzugt 35 bis 50 Gew.-%, auf.

Gemäß einer bevorzugten Ausführungsform der Erfindung weist der Mehrschichtverbundwerkstoff eine Gesamtdicke von 0,5 bis 2,5 mm, vorzugsweise 0,7 bis 2,0 mm, insbesondere 0,8 bis 1,5 mm auf. Praktische Versuche haben gezeigt, dass es mit dem erfindungsgemäßen Mehrschichtverbundwerkstoff möglich ist, selbst bei diesen geringen Dicken ausgesprochen gute mechanische Eigenschaften zu erzielen.

Dabei hat es sich als besonders vorteilhaft erwiesen, wenn die Summe aller innenliegenden ersten Lagen Verbundwerkstoff eine Gesamtdicke von 0,2 bis 2,0 mm, bevorzugt 0,3 bis 1,5 mm, besonders bevorzugt 0,5 bis 1,0 mm aufweist.

Vorteilhaft im Rahmen der Erfindung ist es ferner, wenn die Dicke jeder einzelnen der beiden außenliegenden zweiten bzw. dritten Lagen Verbundwerkstoff jeweils 50 bis 400 $\mu$m, bevorzugt, 100 $\mu$m bis 300 $\mu$m, besonders bevorzugt 120 $\mu$m bis 250 $\mu$m beträgt. Gemäß einer weiteren besonderen Ausführungsform der Erfindung weisen die mindestens eine zweite Lage einen leicht erhöhten, beispielsweise einen 1 bis 5 Gew.-% höheren, Volumengehalt an Fasern, bezogen auf das Gesamtvolumen der Lage Verbundwerkstoff, auf als die mindestens eine erste Lage Verbundwerkstoff auf.

Unter Vol.-% wird hier der Volumenanteil (% v/v) bezogen auf das Gesamtvolumen der Lage Faserverbundwerkstoff verstanden.

Bevorzugt weisen die mindestens zwei Lagen Faserverbundwerkstoff des erfindungsgemäßen Mehrschichtverbundwerkstoffs im Wesentlichen keine Hohlräume, insbesondere im Wesentlichen keine Lufteinschlüsse, auf.

Im Wesentlichen keine Hohlräume bedeutet gemäß einer Ausführungsform, dass der Hohlraumgehalt der mindestens drei Lagen Faserverbundwerkstoff des erfindungsgemäßen Mehrschichtverbundwerkstoffs unter 5 Vol.-%, insbesondere unter 2 Vol.-%, besonders bevorzugt unter 1 Vol.-%, beträgt.

Die Ermittlung des Hohlraumgehalts einer Verbundwerkstofflage oder des Mehrschichtverbundwerkstoffs kann auf unterschiedlichen Wegen erfolgen, welche als allgemein anerkannt betrachtet werden. Beispielsweise kann der Hohlraumgehalt eines Prüfkörpers durch den Harz-Veraschungstest erfolgen, bei dem ein Probekörper in einem Ofen beispielsweise einer Temperatur von 600 °C für 3 Stunden ausgesetzt wird, um das Harz, welches die Fasern in dem Probekörper umschließt zu verbrennen. Die Masse der derart freigelegten Fasern kann dann ermittelt werden, um in einem weiteren kalkulatorischen Schritt auf den Hohlraumgehalt des Probekörpers zu schließen. Ein derartiger Harz-Veraschungstest kann in Anlehnung an die ASTM D 2584-08 durchgeführt werden, um die Einzelgewichte der Fasern und der Polymermatrix zu bestimmen. Hieraus kann in einem weiteren Schritt der Hohlraumgehalt des Probekörpers ermittelt werden, indem die nachfolgende Gleichung 1 genutzt wird:

$$V_f = 100 * (\rho t - \rho c) / \rho t \qquad \text{(Gleichung 1)}$$

wobei

Vf den Hohlraumgehalt der Probe in [%];
ρc die Dichte des Probekörpers, beispielsweise ermittelt durch Flüssig- oder Gaspyknometrie;
ρt die theoretische Dichte des Probekörpers ermittelt nach folgender Gleichung 2

$$\rho t = 1 / [W_f / \rho_f + W_m / \rho_m] \qquad \text{(Gleichung 2)}$$

ρm die Dichte der Polymermatrix (beispielsweise bei einer entsprechenden Kristallinität);
ρf die Dichte der verwendeten Fasern;
Wf der Gewichtsanteil der verwendeten Fasern und
Wm der Gewichtsanteil der Polymermatrix; sind.

Alternativ kann der Hohlraumgehalt durch chemisches Auflösen der Polymermatrix aus dem Probekörper heraus in Anlehnung an ASTM D 3171-09 erfolgen. Der Harz-Veraschungstest sowie die chemische Auflösungsmethode sind eher für Glasfasern geeignet, welche im Allgemeinen gegen schmelzen oder chemischer Behandlung inert sind. Weitere Methoden für sensitivere Fasern sind die indirekte Berechnung des Hohlraumgehalts über die Dichten des Polymers, der Fasern sowie des Probekörpers nach ASTM D 2734-09 (Methode A), wobei die Dichten nach ASTM D792-08 (Methode A) bestimmt werden können. Des Weiteren können auch bildverarbeitende Programme, Rasterschablonen oder das Auszählen der Fehlstellen zur Auswertung des Hohlraumgehalts einer Bildaufnahme, welche durch konventionelle Mikroskopie ermittelt wurde, herangezogen werden.

Ein weiterer Weg zur Bestimmung des Hohlraumgehalts ist die Dickendifferenzmethode, welche in der Ermittlung der Schichtdickendifferenz zwischen theoretischer Bauteildicke und der tatsächlichen Bauteildicke bei bekannten Flächengewichten und Dichten von Polymer sowie Faser besteht. Bei der Berechnung der theoretischen Bauteildicken wird davon ausgegangen, dass keine Hohlräume in dem Aufbau vorhanden sind und eine vollständige Benetzung der Fasern mit Polymer vorliegt. Der Bezug der Dickendifferenz auf die tatsächliche Bauteildicke ergibt den prozentualen Hohlraumgehalt. Die Messung der Dicken kann hierbei beispielsweise mit einer Bügelmessschraube erfolgen. Fehlerminimierte Ergebnisse lassen sich bei dieser Methode bevorzugt durch die Ermittlung des Hohlraumgehalts an Bauteilen bestehend aus mehreren Einzelschichten, bevorzugt mehr als 4 Schichten, besonders bevorzugt mehr als 6 Schichten und ganz besonders bevorzugt mehr als 8 Schichten, bestimmen.

Während die oben beschriebenen Verfahren bei Mittesten eines entsprechenden Standards zu vergleichbaren Ergebnissen führen, wurden die Hohlraumgehalte, wie hier beschrieben, mittels der Dickendifferenzmethode wie in den Beispielen angegeben durchgeführt.

Gegebenenfalls können sich erfindungsgemäß weitere Materiallagen zwischen der mindestens einen ersten Lage und der mindestens einen zweiten Lage, weiter bevorzugt zwischen allen benachbarten Lagen des erfindungsgemäßen Mehrschichtverbundwerkstoffes befinden. Beispielhaft seien hier weitere Lagen aus Kunststoff, der gleich oder verschieden von der in den Lagen verwendeten Kunststoffmatrix sein kann, genannt. Diese Kunststofflagen können insbesondere auch Füllstoffe, die von den erfindungsgemäß vorgesehenen Endlosfasern verschieden sind, enthalten. Ferner können auch Klebstoff-, Textiles Flächengebilde-, Vliesoder Oberflächenvergütungslagen, beispielsweise Lackschichten im erfindungsgemäßen Mehrschichtverbundwerkstoff enthalten sein. Diese weiteren Lagen können zwischen innen- und außenliegenden Lagen, zwischen mehreren innenliegenden Lagen und/oder auf einer oder beiden der außenliegenden Lagen enthalten sein.

Die vorliegende Erfindung betrifft auch einen entsprechenden Mehrschichtverbundwerkstoff, ein Teil für den Einsatz im Automobilbereich, in Gepäckstücken, in Möbeln, in bzw. an Fahrrädern, in Sportausrüstungen oder als Verstärkungselemente in Bekleidung, wobei die genannten Teile mindestens einen erfindungsgemäßen Mehrschichtverbundwerkstoff enthalten, die Verwendung des erfindungsgemäßen Mehrschichtverbundwerkstoffs und ein Verfahren zur Herstellung eines solchen Teils.

Insbesondere betrifft die vorliegende Erfindung Sportausrüstungen wie Helme, Schienbein- , Knie-, Arm- oder Körperschutzausrüstung, Sportartikeln wie Ski, Skischuhe, Sohlen von Sportschuhen, Wakeboards, Surfboards, Paddeln, Taucherflossen, Hockey- oder Tennisschläger, oder Fahrräder, beispielsweise E-Fahrräder, Rennräder, Mountainbikes, Gravel-Bikes, City-Bikes, Fahrradteile wie Rahmen, Rahmenteile, Gabeln, Lenker, Anbauteile wie Sattel, Sattelstütze, Aufnahmen, Federn, Kurbeln, oder als Verstärkungselemente in Bekleidung, beispielsweise in Schuhsohlen, jeweils enthaltend den erfindungsgemäßen faserverstärkten Mehrschichtverbundwerkstoff basierend auf thermoplastischem Polyurethan.

Die vorliegende Erfindung betrifft auch die Verwendung eines erfindungsgemäßen Mehrschichtverbundwerkstoffs in Sportausrüstungen wie Helmen, Schienbein- , Knie-, Arm- oder Körperschutzausrüstungen, Sportartikeln wie Ski, Skischuhe, Sohlen von Sportschuhen, Wakeboards, Surfboards, Paddeln, Taucherflossen, Hockey- oder Tennisschläger, oder Fahrrädern, beispielsweise E-Fahrräder, Rennräder, Mountainbikes, Gravel-Bikes, City-Bikes, Fahrradteilen wie Rahmen, Rahmenteilen, Gabeln, Lenkern, Anbauteilen wie Sattel, Sattelstütze, Aufnahmen, Federn, Kurbeln, oder als Verstärkungselemente in Bekleidung, beispielsweise in Schuhsohlen.

Die vorliegende Erfindung betrifft auch ein Verfahren zur Herstellung eines entsprechenden Teils unter Verwendung des erfindungsgemäßen Mehrschichtverbundwerkstoffes.

Zur Herstellung eines entsprechenden Teils, insbesondere einer Schuhsohle oder einem Teil davon, werden bevorzugt die folgenden Schritte durchgeführt:

a) Bereitstellen eines erfindungsgemäßen Mehrschichtverbundwerkstoffs als Ausgangsmaterial,
b) Umformung und/oder Assemblierung mit weiteren Komponenten zum Teil, insbesondere zu einer Schuhsohle oder einem Teil davon.

Ein weiterer Vorteil des erfindungsgemäßen Mehrschichtverbundwerkstoffs ist, dass er in beliebige Formen umgeformt werden kann. Zur Umformung können alle dem Fachmann bekannten Umformungsverfahren eingesetzt werden. Solche Umformungsverfahren können unter Druck- und/oder Wärmeeinwirkung erfolgen.

Gemäß einer Ausführungsform des erfindungsgemäßen Verfahrens erfolgt die Umformung unter Wärmeeinwirkung, insbesondere durch Thermoformen.

**Patentansprüche**

1. Verfahren zur Herstellung eines Mehrschichtverbundwerkstoffes enthaltend mindestens zwei flächig und stoffschlüssig übereinander liegende Lagen Verbundwerkstoff, wobei die mindestens eine erste Lage Verbundwerkstoff Endlosfasern enthält, wobei die Endlosfasern innerhalb dieser mindestens einen Lage unidirektional ausgerichtet sind und in einem auf thermoplastischem Polyurethan basierenden Kunststoff eingebettet sind, und die mindestens eine zweite Lage Verbundwerkstoff ein textiles Flächengebilde enthält, wobei das textile Flächengebilde in einem auf thermoplastischem Polyurethan basierenden Kunststoff eingebettet ist, mindestens umfassend die folgenden Schritte:

(A) Bereitstellen mindestens einer ersten Lage Verbundwerkstoff enthaltend Endlosfasern, wobei die Endlosfasern innerhalb dieser mindestens einen ersten Lage unidirektional ausgerichtet sind und in einem auf thermoplastischem Polyurethan basierenden Kunststoff eingebettet sind, wobei der Faservolumenanteil der mindestens einen ersten Lage Verbundwerkstoff 10 bis 45 Vol.-% beträgt,
(B) flächiges Aufbringen mindestens eines textilen Flächengebildes auf die mindestens eine erste Lage Verbundwerkstoff aus Schritt (A), um ein Halbzeug enthaltend mindestens eine erste Lage Verbundwerkstoff und mindestens ein Textiles Flächengebilde zu erhalten, und
(C) Verpressen des Halbzeugs aus Schritt (B) bei einem Druck von 2 bis 40 bar(a), einer Temperatur T von 130 bis 290 °C für eine Zeit von 30 bis 600 s, um den Mehrschichtverbundwerkstoff mit einem Faservolumenanteil von 25 bis 55 Vol.-% zu erhalten.

2. Verfahren gemäß Anspruch 1, **dadurch gekennzeichnet, dass** vor Schritt (C) an den Außenseiten des Halbzeugs jeweils mindestens ein Trennfilm, mindestens eine Trennschicht, mindestens ein Trenngewebe oder eine Kombination von zwei oder mehreren davon flächig aufgebracht wird.

3. Verfahren nach Anspruch 1 oder 2, **dadurch gekennzeichnet, dass** in Schritt (B) auf der Oberseite und auf der Unterseite der mindestens einen ersten Lage Verbundwerkstoff jeweils ein textiles Flächengebilde flächig aufgebracht wird.

4. Verfahren nach einem der Ansprüche 1 bis 3, **dadurch gekennzeichnet, dass** in Schritt (A) zwei erste Lagen Verbundwerkstoff flächig aufeinander gelegt werden, wobei die unidirektional orientierten Endlosfasern der beiden Lagen bevorzugt in einem Winkel von 30 bis 130° gegeneinander rotiert sind.

5. Verfahren nach einem der Ansprüche 1 bis 4, **dadurch gekennzeichnet, dass** die mindestens eine erste Lage Verbundwerkstoff enthaltend Endlosfasern eine Dicke von 0,03 bis 1 mm aufweist, und das mindestens eine textile Flächengebilde eine Dicke von 0,03 bis 1 mm aufweist.

6. Verfahren nach einem der Ansprüche 1 bis 5, **dadurch gekennzeichnet, dass** Schritt (C) bei einem Druck von 3 bis 30 bar(a), bevorzugt 5 bis 20 bar(a), erfolgt.

7. Verfahren nach einem der Ansprüche 1 bis 6, **dadurch gekennzeichnet, dass** Schritt (C) bei einer Temperatur T von 170 bis 280 °C, bevorzugt 210 bis 270 °C, besonders bevorzugt 230 bis 260 °C.

8. Verfahren nach einem der Ansprüche 1 bis 7, **dadurch gekennzeichnet, dass** Schritt (C) für eine Zeit von 30 bis 300 s, bevorzugt 80 bis 220 s, erfolgt.

9. Mehrschichtverbundwerkstoff, herstellbar nach dem Verfahren gemäß einem der Ansprüche 1 bis 8.

10. Mehrschichtverbundwerkstoff enthaltend mindestens zwei flächig und stoffschlüssig übereinander liegende Lagen Verbundwerkstoff, wobei die mindestens eine erste Lage Verbundwerkstoff Endlosfasern enthält, wobei die Endlosfasern innerhalb dieser mindestens einen Lage unidirektional ausgerichtet sind und in einem auf thermoplastischem Polyurethan basierenden Kunststoff eingebettet sind, und die mindestens eine zweite Lage Verbundwerkstoff ein textiles Flächengebilde enthält, wobei das textile Flächengebilde in einem auf thermoplastischem Polyurethan basierenden Kunststoff eingebettet ist.

11. Mehrschichtverbundwerkstoff gemäß Anspruch 10, **dadurch gekennzeichnet, dass** die mindestens eine erste Lage Verbundwerkstoff über der mindestens einen zweiten Lage Verbundwerkstoff flächig und stoffschlüssig angeordnet ist und auf der mindestens einen ersten Lage Verbundwerkstoff mindestens eine dritte Lage Verbundwerkstoff flächig und stoffschlüssig angeordnet ist, und die mindestens eine dritte Lage Verbundwerkstoff ein textiles Flächengebilde enthält, wobei das textile Flächengebilde in einem auf thermoplastischem Polyurethan basierenden Kunststoff eingebettet ist.

12. Sportausrüstungen wie Helme, Schienbein-, Knie-, Arm- oder Körperschutzausrüstung, Sportartikeln wie Ski, Skischuhe, Sohlen von Sportschuhen, Wakeboards, Surfboards, Paddeln, Taucherflossen, Hockey- oder Tennisschläger, oder Fahrräder, beispielsweise E-Fahrräder, Rennräder, Mountainbikes, Gravel-Bikes, City-Bikes, Fahrradteile wie Rahmen, Rahmenteile, Gabeln, Lenker, Anbauteile wie Sattel, Sattelstütze, Aufnahmen, Federn, Kurbeln, oder als Verstärkungselemente in Bekleidung, beispielsweise in Schuhsohlen, jeweils enthaltend den faserverstärkten Mehrschichtverbundwerkstoff basierend auf thermoplastischem Polyurethan gemäß einem der Ansprüche 9 bis 11.

13. Verwendung eines Mehrschichtverbundwerkstoffs nach einem der Ansprüche 9 bis 11 in Sportausrüstungen wie Helmen, Schienbein- , Knie-, Arm- oder Körperschutzausrüstungen, Sportartikeln wie Ski, Skischuhe, Sohlen von Sportschuhen, Wakeboards, Surfboards, Paddeln, Taucherflossen, Hockey- oder Tennisschläger, oder Fahrrädern, beispielsweise E-Fahrräder, Rennräder, Mountainbikes, Gravel-Bikes, City-Bikes, Fahrradteilen wie Rahmen, Rahmenteilen, Gabeln, Lenkern, Anbauteilen wie Sattel, Sattelstütze, Aufnahmen, Federn, Kurbeln, oder als Verstärkungselemente in Bekleidung, beispielsweise in Schuhsohlen.

14. Verfahren zur Herstellung eines Teils nach Anspruch 12 unter Verwendung eins Mehrschichtverbundwerkstoffes nach einem der Ansprüche 9 bis 11.

**Europäisches Patentamt**
**European Patent Office**
**Office européen des brevets**

# EUROPÄISCHER RECHERCHENBERICHT

Nummer der Anmeldung

EP 19 20 2934

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | WO 2013/127419 A1 (DAIMLER AG [DE]) 6. September 2013 (2013-09-06) * Abbildung 1 * * Seite 11, 4. Abstaz * * Seite 8, 3. Absatz * * Seite 12, 5. Absatz * ----- | 1-8 | INV. B29C70/20 B29C70/22 B29C70/50 B32B5/26 B32B5/28 |
| X | EP 2 664 445 A1 (EDAG GMBH & CO KGAA [DE]; BAYERISCHE MOTOREN WERKE AG [DE]) 20. November 2013 (2013-11-20) | 9 | |
| Y | * Abbildungen 2, 7 * * Absätze [0038], [0039] * ----- | 1-8 | |
| X | EP 3 251 827 A1 (COVESTRO DEUTSCHLAND AG [DE]) 6. Dezember 2017 (2017-12-06) * Absatz [0071] * * Ansprüche 1, 4, 15 * ----- | 9-14 | |
| Y | EP 2 090 423 A1 (FUKUI PREFECTURAL GOVERNMENT [JP]) 19. August 2009 (2009-08-19) * Absätze [0171], [0186] * ----- | 2 | |

**RECHERCHIERTE SACHGEBIETE (IPC)**

B29C
B32B
C08J
B29K

Der vorliegende Recherchenbericht wurde für alle Patentansprüche erstellt

| Recherchenort | Abschlußdatum der Recherche | Prüfer |
|---|---|---|
| Den Haag | 7. April 2020 | Gasner, Benoit |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 20 2934

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-04-2020

| Im Recherchenbericht angeführtes Patentdokument | Datum der Veröffentlichung | Mitglied(er) der Patentfamilie | Datum der Veröffentlichung |
|---|---|---|---|
| WO 2013127419 A1 | 06-09-2013 | DE 102012004109 A1<br>EP 2819841 A1<br>WO 2013127419 A1 | 05-09-2013<br>07-01-2015<br>06-09-2013 |
| EP 2664445 A1 | 20-11-2013 | KEINE | |
| EP 3251827 A1 | 06-12-2017 | KEINE | |
| EP 2090423 A1 | 19-08-2009 | BR PI0716399 A2<br>CA 2658572 A1<br>CN 101466535 A<br>CN 102815062 A<br>EP 2090423 A1<br>KR 20090091104 A<br>KR 20130009887 A<br>KR 20130009888 A<br>KR 20130045908 A<br>US 2010215887 A1<br>US 2012270009 A1<br>US 2012270030 A1<br>WO 2008062818 A1 | 17-09-2013<br>29-05-2008<br>24-06-2009<br>12-12-2012<br>19-08-2009<br>26-08-2009<br>23-01-2013<br>23-01-2013<br>06-05-2013<br>26-08-2010<br>25-10-2012<br>25-10-2012<br>29-05-2008 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013098224 A1
- DE 102012200059 A1
- DE 102011005462 B3
- GB 1057018 A
- DE 1964834 A
- DE 2901774 A
- EP 2788408 A1

**In der Beschreibung aufgeführte Nicht-Patentliteratur**

- Polyurethane. **G. BECKER ; D. BRAUN.** Kunststoff Handbuch. Carl Hanser Verlag, 1983, vol. 7
- Makromolekulare Stoffe. HOUBEN-WEYL "Methoden der organischen Chemie. Georg Thieme Verlag, 1987, vol. E20, 1587-1593
- *Justus Liebigs Annalen der Chemie,* vol. 562, 75-136
- High Polymers. **J.H. SAUNDERS ; K.C. FRISCH.** Polyurethane. Verlag Interscience Publishers, 1962, vol. XVI
- **R.GÄCHTER ; U. H.MÜLLER.** Taschenbuch für Kunststoff-Additive. Hanser Verlag, 1990